# EUROPEAN PATENT APPLICATION

(11) **EP 1 538 732 A2**
(43) Date of publication of application: **08.06.2005**
(21) Application number: 04028651.0
(22) Date of filing: 03.12.2004
(51) Int. Cl.: H02K 33/10

(54) **Reciprocating motor**

(30) Priority: 04.12.2003 KR 2003087636; 30.08.2004 KR 2004068700
(71) Applicant: LG Electronics Inc., Seoul (KR)
(72) Inventor: Jeong, Sang-Sub, Seoul (KR); Lee, Hyuk, Gyeonggi-Do (KR)
(74) Representative: Schippan, Ralph, Dr.-Ing.

(57) **Abstract**

A reciprocating motor comprises: a first stator portion having a bobbin and lamination sheets laminated outside the bobbin; a second stator portion disposed at an air gap from the first stator portion and having lamination sheets; and a magnet paddle disposed between the first stator portion and the second stator portion and having a permanent magnet installed at a circumference thereof, wherein a plurality of coils are wound inside the bobbin. Accordingly, the plurality of coils can be selectively connected in parallel or in series, thereby effectively controlling the operation according to a load of the reciprocating motor.

## Description

### BACKGROUND OF THE INVENTION

### 1.Field of the Invention

The present invention relates to a reciprocating motor, and particularly, to a reciprocating motor in which a plurality of coils are wound.

### 2.Description of the Background Art

A reciprocating motor has a magnetic flux in a plane form, and a magnet paddle disposed between a pair of stators linearly moves according to variation of the magnetic flux.

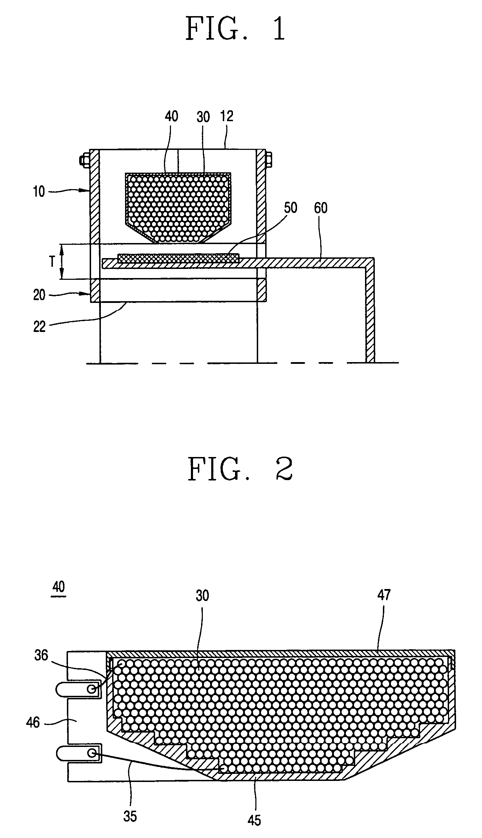

As shown in FIG. 1, a conventional reciprocating motor includes: an outer stator 10 having a cylindrical shape by radially stacking a plurality of lamination sheets 12 outside a bobbin 40 in which a coil 30 is wound; an inner stator 20 disposed in an inner circumference of the outer stator 10 at a certain air gap (T) from an inner circumferential surface of the outer stator 10 and having a cylindrical shape by radially stacking a plurality of lamination sheets 22; and a cylindrical magnet paddle 60 disposed between the outer stator 10 and the inner stator 20, and having a plurality of magnets 50 installed in a circumferential direction thereof.

As shown in FIG. 2, the bobbin 40 includes a body 45 provided with the wound coil 30 therein and having a roughly trapezoidal sectional shape enlarged from an inner circumference toward an outer circumference thereof; a terminal 46 installed at one side of the body 45, for connecting the coil 30 to an external power; and a cover 47 for sealing an internal space of the body 45.

The coil 30 is made of a single wire, and is wound for forming an even number of layers so that its lead-in wire 35 and lead-out wire 36 are extended toward the terminal 46 of the bobbin 40 in the same direction.

As for the reciprocating motor constructed in such a manner, when an external power is applied to the coil 30 through the terminal 46, magnetic flux is formed around the coil 30. The flux forms a kind of closed loop by flowing to the inner stator 20 along one side path of the outer stator 10 and flowing again to another side path of the outer stator 10. And the magnet 50 of the magnet paddle 60 is pushed or pulled according to a direction of the flux, and thus is linearly and reciprocally moved.

To increase capacity of the conventional reciprocating motor described above, a diameter of a conductor in the coil 30 is increased, or the turn number of the coil 30 is increased. However, in case that the diameter of the coil 30 is increased, the stiffness of the coil 30 is increased, and this makes winding of the coil 30 difficult and increases the loss due to a skin effect. Also, a tensile force required during winding operation is increased as much as the increased stiffness of the coil 30. Because such a tensile force works on the bobbin 40 as a large load, the bobbin 40 may be damaged.

### SUMMARY OF THE INVENTION

Therefore, an object of the present invention is to provide a reciprocating motor capable of effectively increasing capacity by winding a plurality of coils at a bobbin.

Another object of the present invention is to provide a reciprocating motor capable of effectively controlling the operation according to required capacity of a motor by providing an operation control apparatus for selectively connecting a plurality of coils in series or in parallel.

To achieve these and other advantages and in accordance with the purpose of the present invention, as embodied and broadly described herein, there is provided a reciprocating motor comprising: a first stator having a bobbin and lamination sheets laminated outside the bobbin; a second stator disposed at an air gap from the first stator and having lamination sheets; and a magnet paddle disposed between the first stator and the second stator and having a magnet installed at a circumference thereof, wherein a plurality of coils are wound inside the bobbin.

In addition, the reciprocating motor comprises an operation control apparatus for selectively connecting the plurality of coils in series or in parallel.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a unit of this specification, illustrate embodiments of the invention and together with the description serve to explain the principles of the invention.

In the drawings:
FIG. 1 is a schematic sectional view showing a conventional reciprocating motor;
FIG. 2 is a sectional view showing a bobbin and a coil of the reciprocating motor of FIG. 1;
FIG. 3 is a schematic sectional view showing a reciprocating motor in accordance with a first embodiment of the present invention;
FIG. 4 is a sectional view showing a bobbin and a coil of the reciprocating motor of FIG. 3;
FIG. 5 is a sectional view showing another example of the bobbin and the coil of the reciprocating motor of FIG. 3;
FIGS. 6 and 7 are circuit views showing an operation control apparatus and its operation process for controlling the reciprocating motor of FIG. 3;
FIGS. 8 and 9 are circuit views showing an operation control apparatus and its operation process of a reciprocating motor in accordance with a second embodiment of the present invention;
FIG. 10 is a circuit view showing an operation control apparatus of a reciprocating motor in accordance with a third embodiment;
FIG. 11 is a sectional view showing a bobbin and a coil of a reciprocating motor in accordance with a fourth embodiment of the present invention; and
FIG. 12 is a sectional view showing another example of the bobbin and the coil of the reciprocating motor of FIG. 11.

### DETAILED DESCRIPTION OF THE PREFERRED EMBODIMENTS

Reference will now be made in detail to the preferred embodiments of the present invention, examples of which are illustrated in the accompanying drawings.

### First embodiment

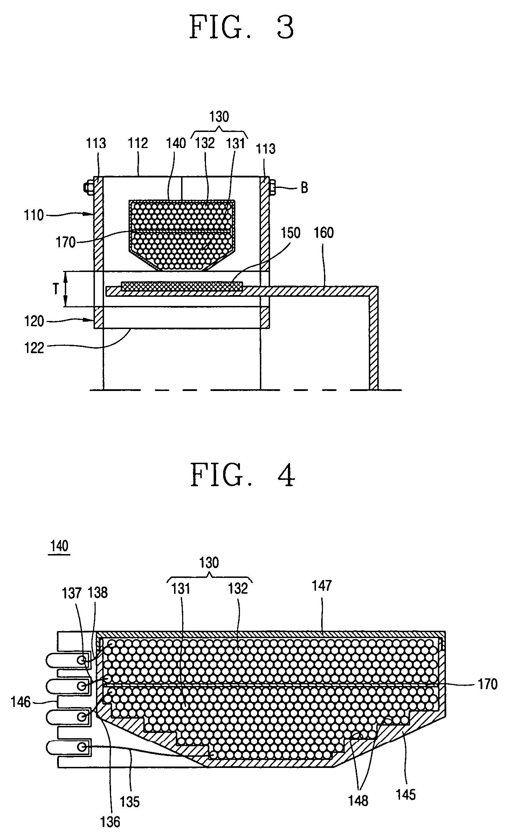

As shown in FIGS. 3 to 7, a reciprocating motor in accordance with the first embodiment of the present invention includes: an outer stator 110 having a cylindrical shape by radially stacking a plurality of lamination sheets 112 outside a bobbin 140 in which a plurality of coils 130 are wound; an inner stator 120 disposed in an inner circumference of the outer stator 110 at a certain air gap (T) from an inner circumferential surface of the outer stator 110 and having a cylindrical shape by radially stacking a plurality of lamination sheets 122; a magnet paddle 160 disposed between the outer stator 110 and the inner stator 120and having a plurality of magnets 150 installed in a circumferential direction thereof; and an operation control apparatus 100 for controlling the operation of the reciprocating motor by selectively connecting the plurality of coils 130 in series or in parallel.

A pair of stator covers 133 is respectively coupled to both sides of the outer stator 110 and the inner stator 120 through a coupling means such as a screw (B) or the like, to thereby fix the outer stator 110 and the inner stator 120.

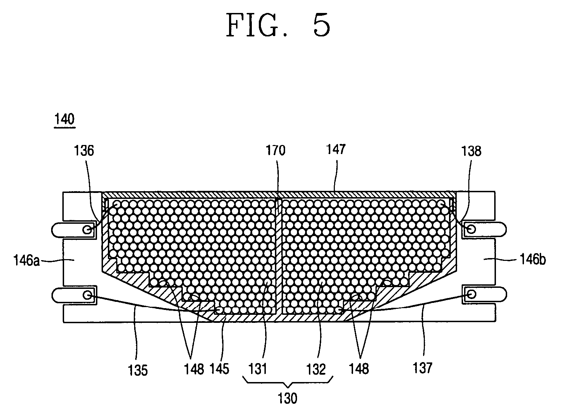

As shown in FIG. 4, the bobbin 140 includes: a body 145 having a roughly trapezoidal sectional shape widened from an inner circumference toward an outer circumference thereof; a terminal 146 installed at one side of the body 145, for connecting the coils 130 with an external power; and a cover 147 for sealing an internal space of the body 145.

At least one step 148 for preventing a slip of the coils 130 is formed at an inner surface of the body 145, and the body 145 and the cover 147 are made of an insulating material.

The number of the coils 130 may be two or more, and in the present embodiment, the coils 130 formed as two wires are wound will be explained. Namely, the coils 130 include a first coil 131 primarily wound at the body 145 of the bobbin 140 and a second coil 132 secondarily wound at an outer circumference of the first coil 131. Here, an insulating member 170 is disposed between the first coil 131 and the second coil 132.

The first coil 131 and the second coil 132 have the same diameter, and are wound by the same turn number, so that the generation of a circulating current is prevented to thereby effectively improve the efficiency of the motor.

A lead-in wire 135 and a lead-out wire 136 of the first coil 131 and a lead-in wire 137 and a lead-out wire line 138 of the second coil 132 are extended toward the terminal 146 of the bobbin 140 in the same direction. Therefore, the first coil 131 and the second coil 132 are wound to form an even number of layers.

As shown in FIG. 5, the first coil 131 and the second coil 132 may be sequentially disposed in a direction of right and left sides of the bobbin 140, that is, in a direction that the magnet paddle 160 linearly moves. In such case, because the first coil 131 and the second coil 132 can be formed as the same shape, resistance and counter electromotive forces of the first coil 131 and the second coil 132 can be made to be the same.

In case that the first coil 131 and the second coil 132 are disposed in a direction of the right and left sides of the bobbin 140, a lead-in wire 135 and a lead-out wire 136 of the first coil 131 and a lead-in wire 137 and a lead-out wire 138 of the second coil 132 are extended from both sides of the bobbin 140. And a pair of terminals 146a and 146b for respectively connecting the first coil 131 and the second coil 132 to an external power is installed at both sides of the bobbin 140, respectively.

In addition, the insulation member 170 disposed between the first coil 131 and the second coil 132 can be formed as a single body with the body 145 of the bobbin 140.

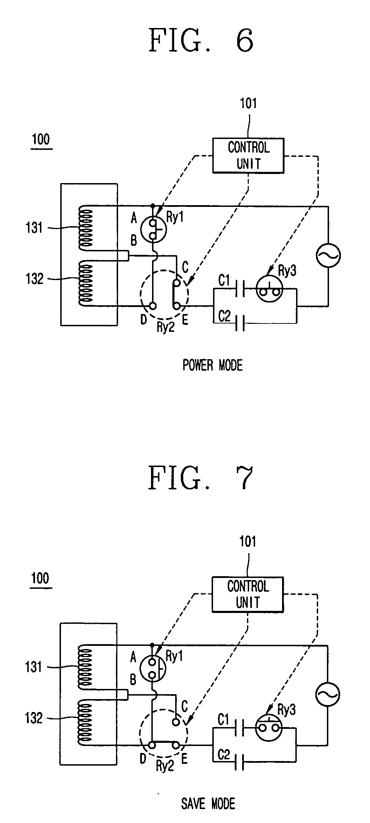

As shown in FIGS. 6 and 7, the operation control apparatus 100 includes: a first capacitor (C1) and a second capacitor (C2) having the same capacitance; a switching means including a first relay (Ry1) and a second relay (Ry2) for connecting the first coil 131 with the second coil 132 in series or in parallel; a third relay (Ry3) connecting the first capacitor (C1) with the second capacitor (C2) in parallel; and a control unit 101 for controlling the switching operation of the first relay (Ry1), the second relay (Ry2) and the third relay (Ry3) according to a load of the reciprocating motor.

The first relay (Ry1) connects or disconnects a contact point A, which is connected with a front end of the first coil 131 and the power, with or from a contact point B, which is connected to a rear end of the second coil 132. In addition, the second relay (Ry2) connects a contact point E, which is connected with power, with a contact point C, which is connected with a rear end of the first coil 131 and a front end of the second coil 132, or connects the contact point E with a contact point D connected with a rear end of the second coil 132.

The third relay (Ry3) is installed at one of the two capacitors (C1) and (C2) and connects or cuts off the power. Accordingly, by the operation of the third relay (Ry3), one of the two capacitors (C1) and (C2) is connected to a circuit, or the two capacitors (C1 ) and (C2) are connected in parallel.

Meanwhile, the control unit 101 is provided with a memory (not shown) in which a preset reference value of a load of a motor is stored. The control unit 101 compares required capacity of a reciprocating motor with a preset reference load, and controls the first, second and third relays (Ry1), (Ry2) and (Ry3) according to the comparison result.

Namely, as shown in FIG. 6, if the required capacity of the reciprocating motor is greater than a preset reference load, the control unit recognizes the motor in an overload state, connects the contact point A with the contact point B of the first relay (Ry1), and connects the contact point C with the contact point E of the second relay (Ry2), thereby connecting the first coil 131 with the second coil 132 in parallel. In addition, the control unit 101 turns on the third relay (Ry3), thereby connecting the first capacitor (C1) and the second capacitor (C2) in parallel.

Accordingly, a constant of a counter electromotive force is decreased, and an input current and a stroke are increased, so that an output of the reciprocating motor is increased.

And, as shown in FIG. 7, if the required capacity of the reciprocating motor is smaller than the preset reference load, the control unit 101 recognizes the motor in a lowload state, disconnects the contact point A from the contact point B of the first relay (Ry1), and connects the contact point E with the contact point D of the second relay (Ry2), thereby connecting the first coil 131 with the second coil 132 in series. In addition, by turning off the third relay (Ry3), only one capacitor (C2) of the first and second capacitors (C1) and (C2) is connected to a circuit.

Accordingly, a constant of the counter electromotive force is increased, and an input current and a stroke are decreased, so that an output of the reciprocating motor is decreased.

The reciprocating motor in accordance with the first embodiment of the present invention as described above is advantageous in that capacity of the reciprocating motor can be effectively increased by winding a plurality of coils 130 at the bobbin 140 of the outer stator 110 and allowing the plurality of coils 130 to be connected in parallel.

In addition, the operation can be effectively controlled according to a load of the reciprocating motor by allowing the plurality of coils 130 to be selectively connected in parallel or in series.

### Second embodiment

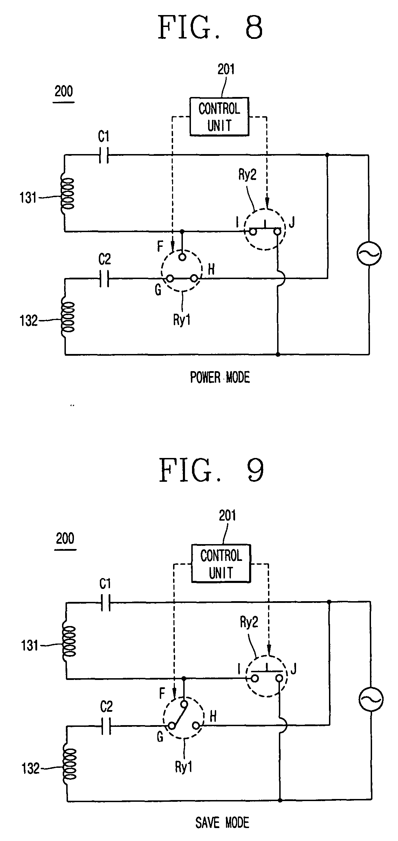

A reciprocating motor in accordance with the second embodiment of the present invention will now be described with reference to FIGS. 8 and 9. The same reference numbers are given to the same parts as those of the above-described embodiment, and descriptions thereon will be omitted.

As shown in FIGS. 8 and 9, in the reciprocating motor in accordance with the second embodiment of the present invention, an operation control apparatus 200 for selectively connecting a first coil 131 with a second coil 132 in series or in parallel to control the operation of the reciprocating motor includes: a first capacitor (C1) and a second capacitor (C2) respectively connected to front ends of the first coil 131 and the second coil 132 and having the same capacitance; a switching means including a first relay (Ry1 ) and a second relay (Ry2) for connecting the first coil 131 and the first capacitor (C1) with the second coil 132 and the second capacitor (C2) in series or in parallel; and a control unit 201 for controlling the switching operation of the first relay (Ry1 ) and the second relay (Ry2) according to a load of the reciprocating motor.

The first relay (Ry1) connects a contact point F, which is connected with a rear end of the first coil 131, with a contact point G, which is connected with a front end of the second coil 132 where the second capacitor (C2) is installed, or connects the contact point G with a contact point H connected to the power. In addition, the second relay (Ry2) connects or disconnects a contact point I, which is connected with a rear end of the first coil 131, with or from a contact point J connected with the power.

By such a construction, as shown in FIG. 8, when required capacity of the reciprocating motor is greater than a preset reference load, the control unit 201 recognizes the motor in an overload state, connects the contact point G with the contact point H of the first relay (Ry1), and connects the contact point I with the contact point J of the second relay (Ry2), thereby connecting in parallel the first coil 131, which is connected with the first capacitor (C1), with the second coil 132, which is connected with the second capacitor (C2). Accordingly, the first capacitor (C1) and the second capacitor (C2) are connected to each other.

Accordingly, a constant of a counter electromotive force is decreased, and an input current and a stroke are increased, so that an output of the reciprocating motor is increased. At this time, the first and second coils 131 and 132 perform LC resonance operation with the capacitor (C1) and (C2) installed at each front end.

And, as shown in FIG. 9, if the required capacity of the reciprocating motor is smaller than the reference load, the control unit 201 recognizes the motor in a lowload state, connects the contact point G with the contact point F of the first relay (Ry1 ) and disconnects the contact point I from the contact point J of the second relay (Ry2), thereby connecting the first coil 131 with the second coil 132 in series. Accordingly, the first capacitor (C1) and the second capacitor (C2) are respectively connected to rear ends of the first coil 131 and the second coil 132.

According to this, a constant of a counter electromotive force is increased, and an input current and a stroke are decreased, so that an output of the reciprocating motor is decreased.

In the reciprocating motor in accordance with the second embodiment of the present invention, because the first and second capacitors (C1) and (C2) are operated as a group with the first and second coils 131 and 132, there is no need to separately provide a relay to the capacitors (C1) and (C2), thereby reducing cost.

Also, the first coil 131 generates a resonance phenomenon to the first capacitor (C1), and the second coil 132 generates a resonance phenomenon to the second capacitor (C2). Accordingly, a phase difference of a current flowing through the first and second coils 131 and 132 can be remarkably reduced, so that the amount of current is reduced to thereby reduce an electrical loss and thus improve efficiency of the motor.

### Third embodiment

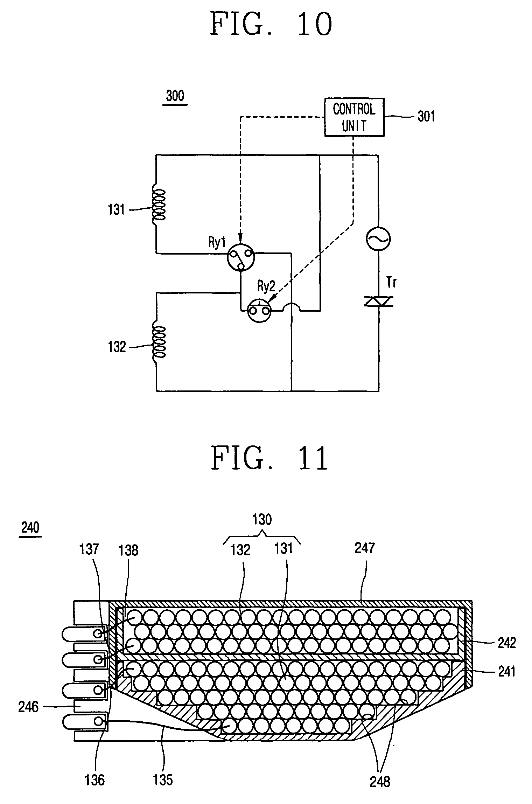

A reciprocating motor in accordance with the third embodiment of the present invention will now be described with reference to FIG. 10. The same reference numbers are given to the same parts as those of the above-described embodiment, and descriptions thereon will be omitted.

As shown in FIG. 10, in the reciprocating motor in accordance with the third embodiment of the present invention, an operation control apparatus 300 selectively connecting a first coil 131 with a second coil 132 in series or in parallel to control the operation of the reciprocating motor includes: a triac (Tr) connected to power, for stably maintaining a voltage; a switching means including a first relay (Ry1 ) and a second relay (Ry2) for connecting the first coil 131 with the second coil 132 in series or in parallel; and a control unit 301 for controlling the switching operation of the first relay (Ry1 ) and the second relay (Ry2) according to a load of the reciprocating motor.

The structure and the operation of the first relay (Ry1 ) and the second relay (Ry2) are substantially the same as those of the above-described first and second embodiments.

By such a structure, if a load of the motor is smaller than a reference load, the control unit 301 operates the first relay (Ry1) and the second relay (Ry2), and connects the first coil 131 with the second coil 12 in series. Also, if the load of the motor is greater than the reference load, the control unit 301 operates the first relay (Ry1 ) and the second relay (Ry2), thereby connecting the first coil with the second coil in parallel.

The operation control apparatus 300 of the reciprocating motor in accordance with the third embodiment of the present invention can desirably reduce an entire cost by removing a capacitor and providing a triac. Also, a plurality of coils having the same wounding ratio are connected in series or in parallel to be operated, so that an entire system can be stably driven.

### Fourth embodiment

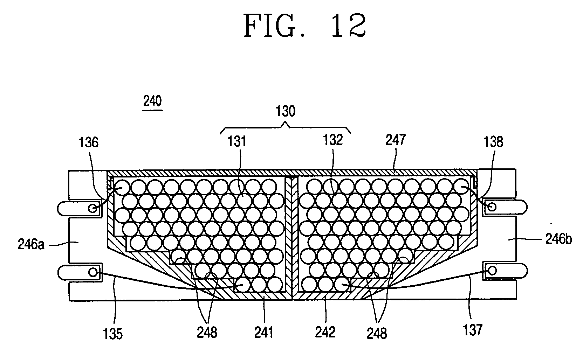

A reciprocating motor in accordance with the fourth embodiment of the present invention will now be described with reference to FIGS. 11 and 12. The same reference numbers are given to the same parts as those of the above-described embodiments, and descriptions thereon will be omitted

As shown in FIG. 11, a bobbin 240 disposed inside an outer stator 110 of the reciprocating motor in accordance with the fourth embodiment of the present invention includes: a first bobbin member 241 on which a first coil 131 is wound; a second bobbin member 242 on which a second coil 132 is wound; a terminal 246 installed at one side of the bobbin 240, for connecting the first coil 131 and the second coil 132 to an external power; and a cover 247 for sealing the bobbin 240 in a state that the first bobbin 241 and the second bobbin 242 are coupled to each other.

The first and second bobbin members 241 and 242 are sequentially disposed from an inner circumference of the outer stator 110 toward an outer circumference of the outer stator 110. Here, the second bobbin member 242 is installed to cover an opening of the first bobbin member 241 on which the first coil 131 is wound, and the cover 247 is installed to cover an opening of the second bobbin member 242 on which the second coil 132 is wound.

The terminal 246 is connected to a lead-in wire 135 and a lead-out wire 136 of the first coil 131 and a lead-in wire 137 and a lead-out wire 138 of the second coil 132.

Meanwhile, as shown in FIG. 12, the first bobbin member 241 and the second bobbin member 242 may be sequentially disposed in a direction that the magnet paddle 160 linearly moves. In such case, the first coil 131 and the second coil 132 can have the same shape, and therefore the resistance and counter electromotive forces of the first coil 131 and the second coil 132 can be made to be the same.

Meanwhile, in case that the first bobbin member 241 and the second bobbin member 242 are sequentially disposed in a direction that the magnet paddle 160 moves, the lead-in wire 135 and the lead-out wire 136 of the first coil 131 and the lead-in wire 137 and the lead-out wire 138 of the second coil 132 are extended from both sides of the bobbin 240. And a pair of terminals 246a and 246b respectively connecting the first coil 131 and the second coil 132 to external power are installed at both sides of the bobbin 240, respectively.

In addition, preferably, at least one step 248 for preventing a slip of the first coil 131 and the second coil 132 is formed at each inner surface of the first and second bobbin members 241, 242.

Preferably, the first and second bobbin members 241 and 242 and the cover 247 are made of an insulating material.

In the reciprocating motor in accordance with the fourth embodiment of the present invention as described above, a plurality of bobbin members are provided, and coils are wound thereon, corresponding to the number of bobbin members, Accordingly, a tensile force generated during winding of the coil is dispersed, so that damage of the bobbin due to the tensile force is prevented and thus reliability can be improved.

The reciprocating motor in accordance with the present invention can effectively increase capacity of the reciprocating motor by winding a plurality of coils on a bobbin of an outer stator and allowing the plurality of coils to be connected in parallel.

In addition, by allowing the plurality of coils to be selectively connected in parallel or in series, the operation can be effectively controlled according to a load of the reciprocating motor.

The spirit or essential characteristics described in each embodiment of the present invention may be independently employed or may be combined with those of other embodiments to be employed.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. A reciprocating motor comprising:
a first stator having a bobbin andlamination sheets laminated outside the bobbin;
a second stator disposed at an air gap from the first stator and having lamination sheets; and
a magnet paddle disposed between the first stator and the second stator and having a magnet installed at a circumference thereof,
wherein a plurality of coils are wound inside the bobbin.

2. The motor of claim 1, wherein the plurality of coils are wound by the same turn number.

3. The motor of claim 1, wherein the plurality of coils have the same diameter.

4. The motor of claim 1, wherein an insulating member is disposed between the coils.

5. The motor of claim 4, wherein the insulating member is formed as a single body with the bobbin.

6. The motor of claim 1, wherein the plurality of coils are sequentially disposed from an inner circumference of the bobbin toward an outer circumference of the bobbin.

7. The motor of claim 1, wherein the plurality of coils are sequentially disposed in a direction that the magnet paddle moves.

8. The motor of claim 1, wherein the bobbin comprises a plurality of bobbin members where the plurality of coils are respectively wound.

9. The motor of claim 8, wherein the plurality of bobbin members are sequentially disposed from an inner circumference of the first stator toward an outer circumference of the first stator.

10. The motor of claim 8, wherein the plurality of bobbin members are sequentially disposed in a direction that the magnet paddle moves.

11. The motor of claim 1, further comprising an operation control apparatus for selectively connecting the plurality of coils in series or in parallel to control the operation of the reciprocating motor.

12. The motor of claim 11, wherein the operation control apparatus comprises:
a switching means for connecting the plurality of coils in series or in parallel; and
a control unit for outputting a signal for controlling the switching means according to the amount of load of the motor.

13. The motor of claim 12, wherein the control unit compares a load of the motor with a preset reference load, connects the plurality coils in series when the load of the motor is smaller than the reference load, and connects the plurality of coils in parallel when the load of the motor is greater than the reference load.

14. The motor of claim 12, wherein the control unit is provided with a memory in which a preset reference value of a load of a motor is stored.

15. The motor of claim 12, wherein the plurality of coils comprises a first coil and a second coil, and
the switching means comprises:
a first relay for connecting or disconnecting a contact point, which is connected with a front end of the first coil, with or from a contact point, which is connected with a rear end of the second coil; and
a second relay for connecting a contact point, which is connected with power, with a contact point where the rear end of the first coil meets with the front end of the second coil, or connecting the contact point, which is connected with power, with a rear end of the second coil.

16. The motor of claim 15, wherein the operation control apparatus includes first and second capacitors having the same capacitance.

17. The motor of claim 16, wherein the first and second capacitors are installed in parallel to the power.

18. The motor of claim 17, wherein a third relay for connecting or cutting off power is installed at one of the first and second capacitors.

19. The motor of claim 18, wherein the control unit compares a load of a motor with a preset reference load, connects only one of the first and second capacitors to a circuit when the load of the motor is smaller than the reference load, and connects the first capacitor with the second capacitor in parallel when the load of the motor is greater than the reference value.

20. The motor of claim 16, wherein the first and second capacitors are directly connected to the first and second coils, respectively.

21. The motor of claim 20, wherein the control unit compares a load of a motor with a preset reference load, connects the first coil and the first capacitor with the second coil and the second capacitor in series when the load of the motor is smaller than the reference load, and connects the first coil and the first capacitor with the second coil and the second capacitor in parallel when the load of the motor is greater than the reference load.

22. The motor of claim 20, wherein the first capacitor and the second capacitor are respectively installed at front ends of the first coil and the second coil, and
the control unit compares a load of a motor with a preset reference load, connects the first capacitor with the second capacitor when the load of the motor is smaller than the reference load, and connects the first capacitor and the second capacitor to rear ends of the first coil and the second coil, respectively, when the load of the motor is greater than the reference load.

23. The motor of claim 15, wherein the operation control apparatus includes a triac.
